# EUROPÄISCHE PATENTSCHRIFT

(11) **EP 3 538 358 B1**
(45) Veröffentlichungstag und Bekanntmachung des Hinweises auf die Patenterteilung: **09.12.2026**
(21) Anmeldenummer: 17811449.2
(22) Anmeldetag: 09.11.2017
(51) Int. Cl.: B32B 5/02, B32B 5/08, B32B 5/12, B32B 5/14, B32B 27/12, B32B 27/32, B32B 37/00, F03D 1/06

(54) **MEHRSCHICHTIGES VERBUNDBAUTEIL**
MULTILAYER COMPOSITE MEMBER
ÉLÉMENT COMPOSITE MULTICOUCHE

(30) Priorität: 10.11.2016 DE 102016121554
(43) Veröffentlichungstag der Anmeldung: 18.09.2019
(73) Patentinhaber: Wobben Properties GmbH, 26607 Aurich (DE)
(72) Erfinder: BAERTL, Christina, 26603 Aurich (DE)
(74) Vertreter: Eisenführ Speiser
(86) Internationale Anmeldenummer: PCT/EP2017/078815
(87) Internationale Veröffentlichungsnummer: WO 2018/087258

(56) Entgegenhaltungen:
- WO-A2-2010/118860
- JP-A- 2006 044 262
- US-A- 3 900 360
- US-B1- 8 039 102

## Beschreibung

Die vorliegende Erfindung betrifft ein Verbundbauteil, die Verwendung eines erfindungsgemäßen Verbundbauteils, ein Windrad für eine Windenergieanlage und ein Verfahren zur Herstellung eines Verbundbauteils.

Rotorblätter für Windenergieanlagen sind seit langem bekannt und beispielsweise beschrieben in der DE 10 2004 007 487 A1 und DE 10 319 246 A1. Sie sind in ihrem Betrieb durch Winddruck, Erosion, Temperaturschwankungen, UV-Einstrahlung sowie durch Niederschläge hohen Belastungen ausgesetzt. Insbesondere an Standorten mit tropischem Klima, die sich durch stark wechselnde Witterungseinflüsse und eine hohe Luftfeuchtigkeit auszeichnen, wie beispielsweise Brasilien oder Taiwan, aber auch in Deutschland neigen Rotorblätter zu Erosion.

Bei Blattspitzengeschwindigkeiten bis zu 300 km/h wirken Sandkörner, Salzpartikel, Insekten, Regentropfen oder andere Schwebeteile in der Luft abrasiv. Besonders im vorderen Kantenbereich wird die Oberfläche von Rotorblättern hierdurch stark belastet und an diesen Stellen kommt es zu einem Abtrag der Rotoroberfläche und damit zu einem Verlust an Aerodynamik und Stabilität. Um die Blattspitzenerosion und den damit verbundenen Wartungs- und Reparaturaufwand zu verringern, kann die maximale Drehzahl der Anlage limitiert werden, was allerdings zu einer geringeren Leistung führt. Es ist daher sinnvoll, die Erosionsbeständigkeit von Rotorblättern zu verbessern.

Gleichzeitig sollen die Rotorblätter jedoch möglichst leicht sein, um die auf eine eventuell vorhandene Rotorblattnabe sowie die zugehörigen Lager und den Turm der Windenergieanlage einwirkenden Biegelasten gering zu halten.

Üblicherweise werden Rotorblätter und Rotorblattelemente in einem Formungsverfahren hergestellt, bei dem Fasermaterialien und/oder Kernwerkstoffe, insbesondere Balsaholz, in eine Rotorblattelementform eingelegt und mit einem aushärtenden Harz zum Bilden eines belastbaren Verbundmaterials beaufschlagt werden. Als Harz werden bei der Herstellung von Rotorblättern bzw. Rotorblattelementen häufig Epoxidharze eingesetzt. Diese sind gut geeignet für den Aufbau der Basis eines Rotorblattes oder Rotorblattelementes aus Fasermaterial und Harz.

Zum Schutz der Rotorblätter bzw. der Rotorblattelemente gegen Witterungseinflüsse und insbesondere gegen Erosion ist versucht worden, eine Oberflächenschicht mit einem Gelcoat-Verfahren einzusetzen, wie in der DE 10 344 379 A1 beschrieben. Nachteilig dabei ist, dass bei einem solchen Verfahren eine Mindestverarbeitungszeit eingehalten werden muss, bis die Gelcoat-Mischung soweit ausreagiert ist, dass sie mit Fasermaterial belegt werden kann. Dies führt zu einer unerwünschten Verlangsamung des Herstellungsverfahrens eines Rotorblattes oder Rotorblattelementes. Darüber hinaus ist es nicht möglich, beim Gelcoat-Verfahren die Herstellung eines Rotorblattelementes bzw. Rotorblattes beliebig zu unterbrechen, um eine Verbindung zwischen Gelcoat-Oberflächenschicht und Infusionsharz zu ermöglichen.

Des Weiteren ist versucht worden, Oberflächenfolien auf das Rotorblatt oder das Rotorblattelement aufzukleben oder anderweitig nachträglich am Rotorblatt oder Rotorblattelement gegebenenfalls lösbar zu befestigen. Beispielsweise werden Polyurethan-Folien auf Rotorblätter aufgeklebt. Eine weitere Möglichkeit aus dem Stand der Technik ist gemäß DE 10 2009 002 501 A1 die Herstellung eines vernetzten Verbundes aus Oberflächenfolie und Infusionsharz. Auch dieses Verfahren ist insbesondere mit Polyurethan-Folien möglich. Polyurethan verfügt über eine hohe Abriebbeständigkeit. Es ist jedoch wünschenswert, die Abriebfestigkeit von Rotorblättern bzw. Rotorblattelementen noch weiter zu verbessern.

Die US 2009/0208721 A1 offenbart ein Verbundbauteil, das aus drei Schichten besteht. Bei der ersten Schicht handelt es sich um eine Duroplastschicht. Bei der zweiten und dritten Schicht handelt es sich jeweils um eine Thermoplastschicht. Die Duroplastschicht und die zweite (mittlere) Thermoplastschicht sind mit Fasern versetzt.

Die GB 846 868 A offenbart ein Laminat, wobei ein Filament in zwei Schichten des Laminates eingebunden ist.

Die WO 2018/045087 A1 offenbart ein Verbundbauteil aus thermoplastischem Kunststoff und Elastomeren. Der thermoplastische Kunststoff besteht aus einem mittels Fasern verstärkten Kunststoff.

Die DE 197 38 388 A1 offenbart ein flächiges textilverstärktes Halbzeug mit thermoplastischer Matrix bestehend aus porenfreien Hauptschichten und Zwischenschichten. Mindestens eine Hauptschicht besteht aus einer mit thermoplastischen Kunststoffen desselben Grundtyps oder anderen verträglichen thermoplastischen Kunststoffen imprägnierten und konsolidierten Verstärkungslage aus Fasergelegen, Fasergeweben, Fasergestricken oder unidirektionaler Faserverstärkung.

Die US 4,412,687 A offenbart ein Verbundbauteil, wobei die Polyethylenschicht auf die Elastomerschicht geklebt ist. Zwischen der Polyethylenschicht und der Elastomerschicht liegt somit eine Klebstoffschicht vor.

Das in der WO 2010/118860 beschriebene Kunststoff-Verbundbauteil besteht aus einem wärmehärtenden Kunstharz als Außenschicht, einer Elastomeren-Schicht und einer Metall- und/oder Kunststoff-Trägerschicht. Die Schichten werden in einem einzigen Arbeitsgang unter Wärmebehandlung oder unter Bestrahlung mit UV-Licht zusammengefügt. Neben anderen Anwendungsgebieten wird in der WO 2010/118860 auch die Verwendung des Kunststoff-Verbundbauteils in Rotorblättern von Hubschraubern oder Windrädern beschrieben.

JP 2006 044262 A offenbart einen geformten Gegenstand mit einer hohlen Form, der durch die Integration von mindestens zwei Teilen, einem ersten Teil und einem zweiten Teil, gebildet wird, wobei mindestens das erste Teil mit einer Gruppe von kontinuierlichen Verstärkungsfasern verstärkt ist. Die Hauptkomponente ist ein wärmehärtendes Harz, und eine thermoplastische Harzschicht ist an einem Verbindungsabschnitt mit dem zweiten Element vorgesehen, und die thermoplastische Harzschicht schließt einen Teil der Verstärkungsfasern ein.

Aufgabe der vorliegenden Erfindung war es, ein Bauteil, insbesondere ein Rotorblatt, zur Verfügung zu stellen, das sich durch eine sehr hohe Verschleiß- und Abriebfestigkeit auszeichnet, bei der Herstellung wenig Zeit und geringe Temperaturen benötigt werden und gleichzeitig eine hohe Langlebigkeit aufweist.

Diese Aufgabe wird durch ein Verbundbauteil (10), gekennzeichnet durch folgenden Schichtenaufbau
a) eine Schicht (11), die zumindest teilweise aus Polyethylen besteht, wobei das Polyethylen ein Ultra High Molecular Polyethylen (UHMW-PE) ist,
b) eine Schicht (12), die zumindest teilweise aus einem Elastomer besteht,
c) eine Schicht (13), die zumindest teilweise aus einem Duroplast oder einem Thermoplast besteht, wobei es sich bei dem Duroplast oder dem Thermoplast um ein Kunststoffharzsystem auf Epoxid-Basis handelt,

wobei die Schicht (11) unmittelbar an der Schicht (12) angeordnet ist und wobei die Schicht (12) unmittelbar an der Schicht (13) angeordnet ist und
wobei ein textiles Flächengebilde (14) mit Rovings (15,16,17) so zwischen der Schicht (12) und (13) angeordnet ist, dass
ein Teil der Rovings (15) zumindest stellenweise vollständig in die Schicht (12) eingebettet ist,
ein Teil der Rovings (16) zumindest stellenweise vollständig in die Schicht (13) eingebettet ist und
ein Teil der Rovings (17) zumindest stellenweise teilweise in die Schicht (12) und teilweise in die Schicht (13) eingebettet sind.

Überraschenderweise hat sich gezeigt, dass durch die erfindungsgemäße Verwendung eines textilen Flächengebildes (14) mit Rovings (15,16,17) die Haftung zwischen der Schicht (12) und der Schicht (13) verbessert werden kann. Die Rovings (15,16,17), die das textile Flächengebilde (14) ausbilden, können dabei entlang der Fasern zwischen den einzelnen Schichten (12) und (13) wechseln. Hierbei ist das Roving zumindest stellenweise vollständig in die Schicht (12) oder (13) eingebettet oder während des Überganges zwischen den Schichten (12) und (13) zumindest stellenweise teilweise in die Schicht (12) und teilweise in die Schicht (13) eingebettet. Durch diesen Übergang der Rovings (15,16,17) zwischen den Schichten (12) und (13) wird die Haftung der Schichten aneinander wesentlich verbessert, da zum Trennen der Schichten sämtliche Fasern des Rovings durchtrennt oder aus einer der Schichten (12) oder (13) herausgerissen werden müssten.

Zudem werden auch die mechanischen und thermischen Eigenschaften der einzelnen Schichten (12) und (13) verbessert, da durch den Einsatz des textilen Flächengebildes (13) in den Schichten (12) und (13) ein Faser-Kunststoff-Verbund ausgebildet wird, der die positiven Eigenschaften der Fasern und des Matrixwerkstoffes vereint.

Unter einem Roving wird ein Bündel, Strang oder Multifilamentgarn aus parallel angeordneten Fasern (Filamente) bezeichnet. Erfindungsgemäß bevorzugt handelt es sich bei den Rovings (15,16,17) um Rovings aus UHMW-PE-Fasern, Carbonfasern, Glasfasern oder Mischungen daraus, vorzugsweise um Rovings aus Glasfasern.

Ein erfindungsgemäßes Verbundbauteil (10) ist bevorzugt, wobei die Rovings (15), die zumindest stellenweise vollständig in die Schicht (12) eingebettet sind, an den Stellen, an denen die Rovings (15) in die Schicht (12) eingebettet sind, überwiegend mit dem Elastomer aus der Schicht (12) durchsetzt sind.

Wenn die Rovings (15) überwiegend mit dem Elastomer aus der Schicht (12) durchsetzt sind, d.h. das Elastomer die Räume zwischen den einzelnen Fasern der Rovings (15) überwiegend ausfüllt, wird eine besonders starke Bindung der Rovings (15) in der Schicht (12) erhalten.

Ein erfindungsgemäßes Verbundbauteil (10) ist bevorzugt, wobei die Rovings (16), die zumindest stellenweise vollständig in die Schicht (13) eingebettet sind, an den Stellen, an denen die Rovings (16) in die Schicht (13) eingebettet sind, überwiegend mit dem Duroplast oder dem Thermoplast aus der Schicht (13) durchsetzt sind.

Wenn die Rovings (16) überwiegend mit der Duroplaste aus der Schicht (13) durchsetzt sind, d.h. die Duroplaste die Räume zwischen den einzelnen Fasern der Rovings (16) überwiegend ausfüllt, wird eine besonders starke Bindung der Rovings (16) in der Schicht (13) erhalten.

Ein erfindungsgemäßes Verbundbauteil (10) ist bevorzugt, wobei die Rovings (17), die zumindest stellenweise teilweise in die Schicht (12) und teilweise in die Schicht (13) eingebettet sind, an den Stellen, an denen die Rovings (17) teilweise in die Schicht (12) und teilweise in die Schicht (13) eingebettet sind, überwiegend mit dem Elastomer aus der Schicht (12) oder mit dem Duroplast oder dem Thermoplast aus der Schicht (13) durchsetzt sind.

Es ist erfindungsgemäß bevorzugt, wenn der Tex-Wert gemäß ISO 1144 und DIN 60905 der Einzelfilamente der Rovings zwischen 250 und 2500 tex liegt. Dabei ist es bevorzugt wenn der Tex-Wert der Einzelfilamente der Rovings einen Wert von ca. 300, 600, 1200 oder 2400 tex aufweist. In einer Ausgestaltung ist es bevorzugt wenn der Tex-Wert der Einzelfilamente der Rovings einen Wert von ca. 300 aufweist, bevorzugt einen Wert zwischen 270 und 330 tex aufweist. In einer zweiten Ausgestaltung ist es bevorzugt wenn der Tex-Wert der Einzelfilamente der Rovings einen Wert von ca. 600 aufweist, bevorzugt einen Wert zwischen 540 und 660 tex aufweist. In einer dritten Ausgestaltung ist es bevorzugt wenn der Tex-Wert der Einzelfilamente der Rovings einen Wert von ca. 1200 aufweist, bevorzugt einen Wert zwischen 1080 und 1320 tex aufweist. In einer vierten Ausgestaltung ist es bevorzugt wenn der Tex-Wert der Einzelfilamente der Rovings einen Wert von ca. 2400 aufweist, bevorzugt einen Wert zwischen 2160 und 2640 tex aufweist. In einer Ausgestaltung ist es bevorzugt wenn der Tex-Wert der Einzelfilamente der Rovings einen Wert von größer gleich 250 aufweist, bevorzugt einen Wert von größer gleich 540 tex aufweist, besonders bevorzugt einen Wert von größer gleich 1080 tex aufweist.Ein erfindungsgemäßes Verbundbauteil (10) ist besonders bevorzugt, wobei die Rovings (15,16,17) überwiegend oder vollständig mit dem Elastomer aus der Schicht (12) oder mit dem Duroplast oder dem Thermoplast aus der Schicht (13) durchsetzt sind.

Eigene Untersuchungen haben überraschenderweise gezeigt, dass insbesondere bei einem Tex-Wert gemäß ISO 1144 und DIN 60905 der Einzelfilamente der Rovings von größer gleich 250 tex ein Durchsetzen der Rovings (15,16,17) mit dem Elastomer aus der Schicht (12) oder mit dem Duroplast oder dem Thermoplast aus der Schicht (13) besonders gut verläuft und die Rovings somit überwiegend bis vollständig mit dem Material durchsetzt werden können. Bei einem Tex-Wert von unter 250 tex sind die Einzelfilamente so fein, dass zur Herstellung der Duroplasten oder Thermoplasten verwendete Reaktionsmischung nicht zwischen die einzelnen Filamente der Rovings eindringen kann. Dies ist in der Hinsicht überraschend, da man bisher davon ausgegangen ist, dass insbesondere bei kleinen Tex-Werten unter 250 tex aufgrund der höheren Kapillarkräfte das Durchdringen der Rovings mit der jeweiligen Reaktionsmischung verbessert wird. Es hat sich zudem gezeigt, dass Rowings deren Einzelfilamente einen Tex-Wert von unter 250 tex aufweisen, nicht die erforderliche (Reiß-)Festigkeit aufweisen.

Es hat sich ebenfalls gezeigt, dass wenn der Tex-Wert der Einzelfilamente der Rovings über 2500 tex liegt, die einzelnen Filamente bzw. das aus den Filamenten gebildete Roving so dick werden bzw. wird, dass die benötigte Dicken der Schichten (13) oder (12) zu hoch wird, um ein optimales Verhältnis zwischen Verschleiß- und Abriebfestigkeiten und dem Gewicht des Verbundbauteiles einzustellen.

Ein erfindungsgemäßes Verbundbauteil (10) ist bevorzugt, wobei es sich bei dem textilen Flächengebilde um ein Gewebe, Gelege, Gewirke oder Geflecht handelt, vorzugsweise um ein Gewebe oder Gelege handelt.

Ein erfindungsgemäßes Verbundbauteil (10) ist bevorzugt, wobei das textile Flächengebilde an den Längsseiten des Verbundbauteiles über die Schichten (11) und/oder (12) herausragt.

Ein erfindungsgemäßes Verbundbauteil (10) ist bevorzugt, wobei die Rovings (15,16,17) durch einen Wirkfaden miteinander verbunden sind.

Erfindungsgemäß ist die Schicht (12) unmittelbar zwischen der Schicht (11) und der Schicht (13) angeordnet und es liegen keine weiteren Schichten zwischen den Schichten (11), (12) und (13).

In der vorliegenden Erfindung handelt es sich bei dem Polyethylen um ein Ultra High Molecular Polyethylen (UHMW-PE).

Ultra High Molecular Polyethylen (UHMW-PE) zeichnet sich durch sehr gute Verschleiß- und Abriebfestigkeiten auch bei abrasiven Medien aus. In eigenen Untersuchungen hat sich gezeigt, dass durch die Verwendung einer Schicht (11), die zumindest teilweise aus UHMW-PE besteht, im erfindungsgemäßen Verbundbauteil die Verschleiß- und Abriebfestigkeit des Verbundbauteils, insbesondere von Rotorblättern, signifikant verbessert werden kann.

Unter einem High Molecular Polyethylen (HMW-PE) wird im Rahmen der vorliegenden Erfindung ein hochmolekulares Polyethylen mit einer mittleren Molmasse von 500 bis 1000 kg/mol verstanden. Unter einem Ultra High Molecular Polyethylen (UHMW-PE) wird im Rahmen der vorliegenden Erfindung ein ultrahochmolekulares Polyethylen mit einer mittleren Molmasse von über 1000 kg/mol verstanden. Im Rahmen der vorliegenden Erfindung ist es bevorzugt, wenn das eingesetzte UHMW-PE eine mittlere Molmasse zwischen 1000 kg/mol bis 10000 kg/mol aufweist, besonders bevorzugt eine mittlere Molmasse zwischen 1000 kg/mol und 5000 kg/mol, insbesondere bevorzugt zwischen 3000 kg/mol und 5000 kg/mol. Die Bestimmung der mittleren Molmasse erfolgt rechnerisch mittels Margolies-Gleichung. Bei dem eingesetzten Polyethylen kann es sich um ein lineares oder ein vernetztes Polyethylen handeln.

Das eingesetzte ultrahochmolekulare Polyethylen hat vorzugsweise eine Dichte von 0,93 bis 0,94 g/cm³.

In einer bevorzugten Ausgestaltung der vorliegenden Erfindung enthält die Schicht (11) zusätzlich einen UV-Stabilisator, der das Polyethylen gegen Alterung durch ultraviolettes Licht schützt. Als UV-Stabilisatoren sind organische und anorganische UV-Absorber bevorzugt, insbesondere ausgewählt aus der Liste umfassend Benzophenone, Benzotriazole, Oxalanilide, Phenyltriazine, Ruß, Titandioxid, Eisenoxidpigmente und Zinkoxid oder 2,2,6,6-Tetramethylpiperidin-Derivate wie Bis(2,2,6,6-tetramethyl-4-piperidyl)sebacat ("Hindered amine light stabilizer (HALS)").

Durch die Anwesenheit eines UV-Stabilisators kann die Langzeitbeständigkeit gegenüber UV-Licht erhöht werden.

Besonders bevorzugt ist es, wenn die Schicht (11), die zumindest teilweise aus Ultra High Molecular Polyethylen besteht, überwiegend aus Ultra High Molecular Polyethylen besteht, insbesondere zu mehr als 50 Gew.-%, bevorzugt zu mehr als 80 Gew.-%, besonders bevorzugt zu mehr als 95 Gew.-% aus Ultra High Molecular Polyethylen besteht, bezogen auf das Gesamtgewicht der Schicht.

Ein erfindungsgemäßes Verbundbauteil (10) ist bevorzugt, wobei das Elastomer ein Ethylen-Propylen-Kautschuk (EPM), Ethylen-Propylen-Dien-Kautschuk (EPDM), Ethylen-Acrylat-Kautschuk (EAM), Fluorkarbon-Kautschuk (FKM), Acrylat-Kautschuk (ACM), Polyurethan-Elastomer (vorzugsweise thermoplastisches Polyurethan-Elastomer), Ethylenvinylacetat (EVA) oder Acrylnitril-Butadien-Kautschuk (NBR) ist, vorzugsweise ein Ethylen-Propylen-Dien-Kautschuk (EPDM) ist.

Besonders bevorzugt ist es, wenn die Schicht (12), die zumindest teilweise aus einem Elastomer besteht, überwiegend aus einem Elastomer besteht, insbesondere zu mehr als 50 Gew.-%, bevorzugt zu mehr als 80 Gew.-%, besonders bevorzugt zu mehr als 95 Gew.-% aus einem Elastomer besteht, insbesondere aus Ethylen-Propylen-Dien-Kautschuk, bezogen auf das Gesamtgewicht der Schicht.

In einer Ausgestaltung der vorliegenden Erfindung besteht die Schicht (12) aus zwei Zonen des Elastomers. Es hat sich in eigenen Untersuchungen gezeigt, dass die Herstellung eines erfindungsgemäßen Verbundbauteils besonders vorteilhaft ist, wenn zunächst eine erste Zone des Elastomers auf die Schicht (11) aufgetragen wird. Im Anschluss wird in einem zweiten Schritt eine zweite Zone des Elastomers auf die erste Zone des Elastomers aufgetragen. Beide Zonen des Elastomers bilden die Schicht (12) aus. Dabei hat es sich als vorteilhaft und somit als bevorzugt erwiesen, wenn das textile Flächengebilde (14) lediglich in der zweiten Zone der Schicht (12) eingebettet ist.

In einer bevorzugten Ausgestaltung der vorliegenden Erfindung enthält die Schicht (12) zusätzlich zumindest ein Additiv ausgewählt aus der Gruppe bestehend aus Acrylaten, Methacrylaten, Epoxidharzen, Phenolharzen, Novolaken, Hexamethylentetramin, Hexamethoxymethylmelamin und Guanidine. Diese Additive sind dazu geeignet, die Festigkeit der Schicht (12) zu verbessern und/oder die Haftung der Schicht (12) an die anderen Schichten zu verbessern.

Unter einem Elastomer werden im Rahmen der vorliegenden Erfindung formfeste, aber elastisch verformbare Kunststoffe verstanden, deren Glasübergangspunkt sich unterhalb der Einsatztemperatur (z.B. 25°C) befindet. Die Kunststoffe können sich bei Zug- und Druckbelastung elastisch verformen, finden aber danach in ihre ursprüngliche, unverformte Gestalt zurück.

Bei einem erfindungsgemäßen Verbundbauteil (10) handelt es sich bei dem Duroplast oder dem Thermoplast um ein Kunststoffharzsystem auf Epoxid-Basis.

Besonders bevorzugt ist es, wenn die Schicht (13), die zumindest teilweise aus einem Duroplast oder einem Thermoplast besteht, überwiegend aus einem Duroplast oder einem Thermoplast besteht, insbesondere zu mehr als 50 Gew.-%, bevorzugt zu mehr als 80 Gew.-%, besonders bevorzugt zu mehr als 95 Gew.-% aus einem Duroplast oder einem Thermoplast besteht.

Im Rahmen dieser Erfindung wird unter einem Duroplast ein Kunststoff verstanden, der nach seiner Aushärtung nicht mehr durch Erwärmung verformt werden kann, ohne dass eine Zersetzung des Kunststoffes stattfindet.

Im Rahmen dieser Erfindung wird unter einem Thermoplast ein Kunststoff verstanden, der sich in einem bestimmten Temperaturbereich (thermo-plastisch) reversibel verformen lässt, wobei das Verformen des Kunststoffes durch Erwärmung bis in den schmelzflüssigen Zustand und Abkühlung beliebig oft wiederholt werden.

Gemäß einer bevorzugten Ausgestaltung der vorliegenden Erfindung handelt es sich bei der Schicht (13) um ein mittels Fasern verstärkten Duroplast oder Thermoplast, wobei die Fasern vorzugsweise UHMW-PE-Fasern (z.B. Dyneema-Fasern), Carbonfasern, Aramidfasern oder Glasfasern sind. Wobei es sich bei den Fasern nicht um die Rovings (15,16,17) handelt, sondern um Fasern, die lediglich in der Schicht (13) enthalten sind.

Mittels Fasern verstärkte Duroplaste oder Thermoplaste zeichnen sich durch hohe mechanische und thermische Stabilität bei einem geringen spezifischen Gewicht aus und sind daher für den Aufbau der Basis eines Rotorblattes oder Rotorblattelementes sehr gut geeignet.

Erfindungsgemäß bevorzugt ist ein Verbundbauteil, bei dem die Schicht (13) zusätzlich zumindest ein Additiv ausgewählt aus der Gruppe bestehend aus Acrylaten, Methacrylaten, Phenolharzen und Novolaken enthält.

Ebenfalls bevorzugt ist ein erfindungsgemäßes Verbundbauteil, bei dem es sich bei der Duroplaste um ein Kunststoffharzsystem mit einer Epoxidharzmatrix handelt, die vor dem Aushärten als Mehrkomponentensystem vorliegt und zumindest eine Komponente, die einen Amin-Härter umfasst, zusätzlich zumindest ein Additiv enthält ausgewählt aus der Liste bestehend aus Hexamethylentetramin, Hexamethoxymethylmelamin und Guanidine.

Ein erfindungsgemäßes Verbundbauteil (10) ist bevorzugt, wobei es sich bei dem Verbundbauteil um ein Rotorblatt handelt, vorzugsweise um ein Rotorblatt eines Windrades.

In einer erfindungsgemäß bevorzugten Ausgestaltung handelt es sich bei dem Verbundbauteil um ein Rotorblatt mit einer Druckseite, einer Saugseite, einer Hinterkante und einer Vorderkante (1110) (auch Rotorblattnase genannt), wobei sich die Vorderkante entlang der Längsrichtung des Rotorblattes zwischen einer Spitze und einer Wurzel des Rotorblattes erstreckt. Dabei ist es bevorzugt, dass die Vorderkante des Rotorblattes die Schichten (11), (12) und (13) aufweist und die Druckseite, Saugseite und/oder Hinterkante des Rotorblattes vorzugsweise nicht oder nicht vollständig die Schichten (11) und (12) aufweisen bzw. aufweist.

In einer besonders bevorzugten Ausgestaltung handelt es sich bei dem Verbundbauteil um ein Rotorblatt, wobei in einem auf der Vorderkante (1110) befindlichen Bereich die Schichten (11), (12) und (13) angeordnet sind und der Bereich eine Breite orthogonal zur Längsachse des Rotorblattes von 5 bis 35 cm, vorzugsweise 10 bis 20 cm, besonders bevorzugt 14 bis 18 cm aufweist und eine Länge entlang der Längsachse des Rotorblattes, die mindestens 10 %, vorzugsweise mindestens 15 %, weiter bevorzugt mindestens 20 % der Gesamtlänge des Rotorblattes entspricht, und/oder eine Länge entlang der Längsachse des Rotorblattes, die maximal 35 %, vorzugsweise maximal 30 %, weiter bevorzugt maximal 25 % der Gesamtlänge des Rotorblattes entspricht.

Darüber hinaus ist es bevorzugt, dass die Schicht (11) und/oder Schicht (12) unabhängig voneinander eine Dicke von 100 bis 5.000 µm aufweist, vorzugsweise eine Dicke von 300 bis 900 µm aufweist, besonders bevorzugt eine Dicke von 400 bis 600 µm aufweist.

Es hat sich in eigenen Untersuchungen gezeigt, dass bei diesen Schichtdicken ein sehr gutes Verhältnis zwischen Verschleiß- und Abriebfestigkeiten und dem Gewicht des Verbundbauteiles vorliegt. Bei einer zu dicken Schicht (11) nimmt das Gewicht des Verbundbauteils zu, ohne dass die Verschleiß- und Abriebfestigkeit wesentlich verbessert werden. Bei einer zu dünnen Schicht (11) nimmt die Verschleiß- und Abriebfestigkeit allerdings ab.

Erfindungsgemäß bevorzugt ist ein Verbundbauteil, gekennzeichnet durch folgenden Schichtenaufbau
a) eine Schicht (11), die zumindest teilweise aus einem Ultra High Molecular Polyethylen (UHMW-PE) besteht,
b) eine Schicht (12), die zumindest teilweise aus einem Ethylen-Propylen-Dien-Kautschuk (EPDM) besteht,
c) eine Schicht (13), die zumindest teilweise aus einem Duroplast besteht, wobei der Duroplast ein Kunststoffharzsystem auf Epoxid-Basis ist,

wobei ein textiles Flächengebilde (14) mit Rovings (15,16,17) so zwischen der Schicht (12) und (13) angeordnet ist, dass
ein Teil der Rovings (15) zumindest stellenweise vollständig in die Schicht (12) eingebettet ist,
ein Teil der Rovings (16) zumindest stellenweise vollständig in die Schicht (13) eingebettet ist und
ein Teil der Rovings (17) zumindest stellenweise teilweise in die Schicht (12) und teilweise in die Schicht (13) eingebettet sind,
wobei es sich bei dem textilen Flächengebilde um ein Gewebe oder Gelege handelt,
wobei es sich bei den Rovings (15,16,17) um Rovings aus Glasfasern handelt,
wobei die Glasfasern vorzugsweise einen Tex-Wert gemäß ISO 1144 zwischen 250 und 2500 tex aufweisen,
und die Schicht (11) und/oder Schicht (12) unabhängig voneinander vorzugsweise eine Dicke von 100 bis 5.000 µm aufweist, weiter bevorzugt eine Dicke von 300 bis 900 µm aufweist, besonders bevorzugt eine Dicke von 400 bis 600 µm aufweist.

Erfindungsgemäß bevorzugt ist ein Verbundbauteil, gekennzeichnet durch folgenden Schichtenaufbau
a) eine Schicht (11), die zu mehr als 50 Gew.-%, bevorzugt zu mehr als 80 Gew.-%, besonders bevorzugt zu mehr als 95 Gew.-% aus einem Ultra High Molecular Polyethylen (UHMW-PE) besteht,
b) eine Schicht (12), die zu mehr als 50 Gew.-%, bevorzugt zu mehr als 80 Gew.-%, besonders bevorzugt zu mehr als 95 Gew.-% aus einem Ethylen-Propylen-Dien-Kautschuk (EPDM) besteht,
c) eine Schicht (13), die zu mehr als 50 Gew.-%, bevorzugt zu mehr als 80 Gew.-%, besonders bevorzugt zu mehr als 95 Gew.-% aus einem Duroplast besteht, wobei der Duroplast ein Kunststoffharzsystem auf Epoxid-Basis ist,

wobei ein textiles Flächengebilde (14) mit Rovings (15,16,17) so zwischen der Schicht (12) und (13) angeordnet ist, dass
ein Teil der Rovings (15) zumindest stellenweise vollständig in die Schicht (12) eingebettet ist,
ein Teil der Rovings (16) zumindest stellenweise vollständig in die Schicht (13) eingebettet ist und
ein Teil der Rovings (17) zumindest stellenweise teilweise in die Schicht (12) und teilweise in die Schicht (13) eingebettet sind,
wobei es sich bei dem textilen Flächengebilde um ein Gewebe oder Gelege handelt,
wobei es sich bei den Rovings (15,16,17) um Rovings aus Glasfasern handelt,
wobei die Glasfasern einen Tex-Wert gemäß ISO 1144 zwischen 250 und 2500 tex aufweisen,
und die Schicht (11) und/oder Schicht (12) unabhängig voneinander vorzugsweise eine Dicke von 100 bis 5.000 µm aufweist, weiter bevorzugt eine Dicke von 300 bis 900 µm aufweist, besonders bevorzugt eine Dicke von 400 bis 600 µm aufweist.

Erfindungsgemäß bevorzugt ist ein Verbundbauteil, gekennzeichnet durch folgenden Schichtenaufbau
a) eine Schicht (11), die zumindest teilweise aus einem Ultra High Molecular Polyethylen (UHMW-PE) besteht,
b) eine Schicht (12), die zumindest teilweise aus einem Ethylen-Propylen-Dien-Kautschuk (EPDM) besteht,
c) eine Schicht (13), die zumindest teilweise aus einem Duroplast besteht, wobei der Duroplast ein Kunststoffharzsystem auf Epoxid-Basis ist,

wobei ein textiles Flächengebilde (14) mit Rovings (15,16,17) so zwischen der Schicht (12) und (13) angeordnet ist, dass
ein Teil der Rovings (15) zumindest stellenweise vollständig in die Schicht (12) eingebettet ist,
ein Teil der Rovings (16) zumindest stellenweise vollständig in die Schicht (13) eingebettet ist und
ein Teil der Rovings (17) zumindest stellenweise teilweise in die Schicht (12) und teilweise in die Schicht (13) eingebettet sind,
wobei es sich bei dem textilen Flächengebilde um ein Gewebe oder Gelege handelt
wobei es sich bei den Rovings (15,16,17) um Rovings aus Glasfasern handelt,
wobei die Glasfasern vorzugsweise einen Tex-Wert gemäß ISO 1144 von größer gleich 250 tex aufweisen,
und die Schicht (11) und/oder Schicht (12) unabhängig voneinander vorzugsweise eine Dicke von 100 bis 5.000 µm aufweist, weiter bevorzugt eine Dicke von 300 bis 900 µm aufweist, besonders bevorzugt eine Dicke von 400 bis 600 µm aufweist.

Ein weiterer Aspekt der vorliegenden Erfindung betrifft ein Windrad, umfassend ein erfindungsgemäßes Verbundbauteil. Dabei ist es besonders bevorzugt, dass es sich um ein Windrad einer Windenergieanlage handelt und das erfindungsgemäße Verbundbauteil an zumindest einem Rotorblattelement, insbesondere an zumindest einer Rotorblattkante, vorzugsweise einer Rotorblattvorderkante, angeordnet ist. Besonders bevorzugt ist es, dass das erfindungsgemäße Verbundbauteil an allen Rotorblattkanten, vorzugsweise an allen Rotorblattvorderkanten, einer Windenergieanlage angeordnet ist.

Ein weiterer Aspekt im Zusammenhang mit der vorliegenden Erfindung betrifft eine Verwendung des erfindungsgemäßen Verbundbauteils in Windrädern, Rotorblättern von Windrädern, Flügeln von Flugzeugen oder Hubschraubern, Tragflächen von Flugzeugen oder Hubschraubern, Rotorblätter von Flugzeugen oder Hubschraubern, Turbinenschaufeln von Triebwerken, Karosseriebauteile von Fahrzeugen, Rumpf- oder Kielbereich von Wasserfahrzeugen oder Nutzflächen von Sportgeräten. Besonders bevorzugt ist die erfindungsgemäße Verwendung in Rotorblattkanten, vorzugsweise an Rotorblattvorderkanten, einer Windenergieanlage.

Das erfindungsgemäße Verbundbauteil kann allerdings auch in anderen Bereichen angewendet werden, in denen eine Erosion der Oberflächen vermieden werden soll. Dies sind erfindungsgemäß beispielsweise:
- Flügel, Tragflächen, Rotorblätter von Flugzeugen oder Hubschraubern,
- Turbinenschaufeln von Triebwerken,
- Karosseriebauteile von Fahrzeugen,
- Rumpf- oder Kielbereich von Wasserfahrzeugen oder
- Nutzflächen von Sportgeräten.

Ein weiterer Aspekt im Zusammenhang mit der vorliegenden Erfindung betrifft ein Verfahren zur Herstellung eines erfindungsgemäßen Verbundbauteiles, umfassend die folgenden Schritte:
- Herstellen oder Bereitstellen einer Schicht (11), die zumindest teilweise aus Polyethylen besteht, wobei das Polyethylen ein Ultra High Molecular Polyethylen (UHMW-PE) ist,
- Herstellen oder Bereitstellen einer Reaktionsmischung zur Herstellung eines Elastomers,
- Beschichten einer Seite der hergestellten oder bereitgestellten Schicht (11) mit der hergestellten oder bereitgestellten Reaktionsmischung zur Herstellung eines Elastomers,
- Herstellen oder Bereitstellen eines textiles Flächengebildes und Auflegen eines textilen Flächengebildes auf die beschichtete Reaktionsmischung zur Herstellung eines Elastomers, sodass ein Teil der Rovings zumindest stellenweise vollständig in die Reaktionsmischung eingebettet ist,
- Vulkanisieren bzw. Vulkanisierenlassen der hergestellten oder bereitgestellten Reaktionsmischung, sodass eine Schicht (12) resultiert, die zumindest teilweise aus einem Elastomer besteht,
- Herstellen oder Bereitstellen einer Reaktionsmischung zur Herstellung eines Duroplasts oder Thermoplasts, wobei es sich bei dem Duroplast oder dem Thermoplast um ein Kunststoffharzsystem auf Epoxid-Basis handelt,
- Beschichten der hergestellten Schicht (12) mit der hergestellten oder bereitgestellten Reaktionsmischung zur Herstellung eines Duroplasts oder Thermoplasts, sodass ein Teil der Rovings zumindest stellenweise vollständig in der Reaktionsmischung zur Herstellung eines Duroplasts oder Thermoplasts eingebettet ist,
- Aushärten bzw. Aushärtenlassen der hergestellten oder bereitgestellten Reaktionsmischung zur Herstellung eines Duroplasts oder Thermoplasts, sodass eine Schicht (13) resultiert, die zumindest teilweise aus einem Duroplast oder Thermoplast besteht.

Ein weiterer Aspekt im Zusammenhang mit der vorliegenden Erfindung betrifft ein Verfahren zur Herstellung eines erfindungsgemäßen Verbundbauteiles, umfassend die folgenden Schritte:
- Herstellen oder Bereitstellen einer Schicht (11), die zumindest teilweise aus Polyethylen besteht, wobei das Polyethylen ein Ultra High Molecular Polyethylen (UHMW-PE) ist,
- Herstellen oder Bereitstellen einer Reaktionsmischung zur Herstellung eines Elastomers,
- Beschichten einer Seite der hergestellten oder bereitgestellten Schicht (11) mit der hergestellten oder bereitgestellten Reaktionsmischung zur Herstellung eines Elastomers,
- Vulkanisieren bzw. Vulkanisierenlassen der hergestellten oder bereitgestellten Reaktionsmischung, sodass eine erste Zone einer Schicht (12) resultiert,
- Herstellen oder Bereitstellen einer Reaktionsmischung zur Herstellung eines Elastomers,
- Beschichten der ersten Zone der Schicht (12) mit der hergestellten oder bereitgestellten Reaktionsmischung zur Herstellung eines Elastomers,
- Herstellen oder Bereitstellen eines textilen Flächengebildes und Auflegen des textilen Flächengebildes auf die beschichtete Reaktionsmischung zur Herstellung eines Elastomers, sodass ein Teil der Rovings zumindest stellenweise vollständig in die Reaktionsmischung eingebettet ist,
- Vulkanisieren bzw. Vulkanisierenlassen der hergestellten oder bereitgestellten Reaktionsmischung, sodass eine zweite Zone der Schicht (12) resultiert und die Schicht (12) vollständig ausgebildet ist,
- Herstellen oder Bereitstellen einer Reaktionsmischung zur Herstellung eines Duroplasts oder Thermoplasts, wobei es sich bei dem Duroplast oder dem Thermoplast um ein Kunststoffharzsystem auf Epoxid-Basis handelt,
- Beschichten der hergestellten Schicht (12) mit der hergestellten oder bereitgestellten Reaktionsmischung zur Herstellung eines Duroplasts oder Thermoplasts, sodass ein Teil der Rovings zumindest stellenweise vollständig in der Reaktionsmischung zur Herstellung eines Duroplasts oder Thermoplasts eingebettet ist,
- Aushärten bzw. Aushärtenlassen der hergestellten oder bereitgestellten Reaktionsmischung zur Herstellung eines Duroplasts oder Thermoplasts, sodass eine Schicht (13) resultiert, die zumindest teilweise aus einem Duroplast oder Thermoplast besteht.

Ein weiterer Aspekt im Zusammenhang mit der vorliegenden Erfindung betrifft ein Verbundbauteil hergestellt durch ein erfindungsgemäßes Verfahren.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.
Fig. 1 zeigt eine schematische Darstellung einer Windenergieanlage mit Rotorblattelement gemäß der Erfindung;
Fig. 2 zeigt schematisch eine Ausführungsform eines Rotorblattelementes gemäß der Erfindung;
Fig. 3 zeigt in schematischer Darstellung einen Ausschnitt des Rotorblattelementes aus Fig. 2;

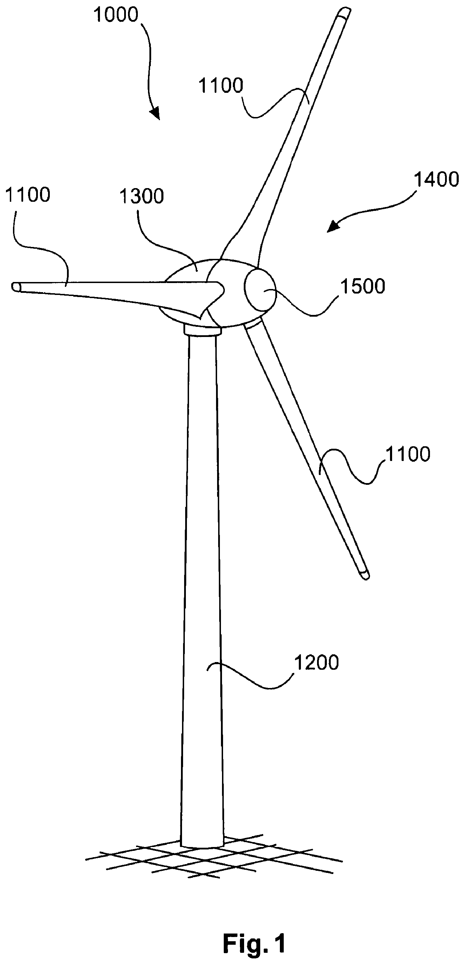

Fig. 1 zeigt eine Windenergieanlage 1000 mit einem Turm 1200 und einer Gondel 1300. An der Gondel 1300 ist ein Rotor 1400 mit drei Rotorblättern 1100 und einem Spinner 1500 angeordnet. Der Rotor 1400 wird im Betrieb durch den Wind in eine Drehbewegung versetzt und treibt dadurch einen Generator in der Gondel 1300 an. Die Rotorblätter 1100 der Windenergieanlage 1000 verfügen über eine Basis (Schicht 13) aus einem Duroplast und ist stellenweise mit einer Oberflächenfolie (Schicht 11) aus Polyethylen beschichtet, wobei sich zwischen der Oberflächenfolie und der Basis eine Elastomer-Schicht (Schicht 12) befindet. Dieser Aufbau wird anhand der folgenden Figuren näher erläutert.

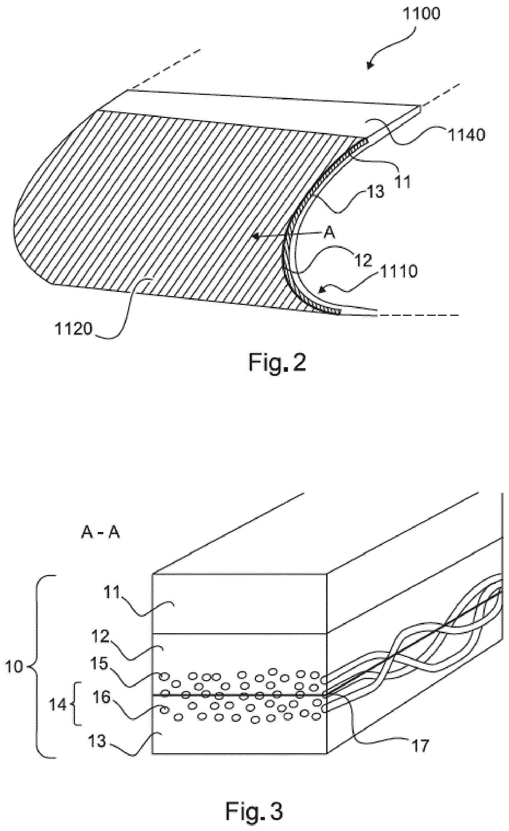

Fig. 2 zeigt eine Rotorblattelement 1110 des Rotorblattes 1100, nämlich die Rotorblattnase. Die Rotorblattnase 1110 verfügt über eine Oberflächenfolie 11. Diese besteht in diesem Ausführungsbeispiel aus Polyethylen mit ultrahohem Molekulargewicht (UHMW-PE). Die Oberflächenfolie 11 (Schicht 11) ist über eine Anbindungsschicht 12 (Schicht 12) mit der Basis des Rotorblattelementes 13 (Schicht 13) verbunden. Die Basis 13 (Schicht 13) des Rotorblattelementes besteht dabei zumindest teilweise aus einem Duroplast. Im Ausführungsbeispiel ist die Duroplaste ein Epoxidharz. Die Anbindungsschicht 12 (Schicht 12) besteht zumindest teilweise aus einem Elastomer. Durch die Anbindung der Oberflächenfolie 11 (Schicht 11) an die Basis 13 (Schicht 13) mittels eines Elastomers ist das Fügen von UHMW-PE auf Epoxidharz möglich. Die Oberflächenfolie 11 (Schicht 11) aus UHMW-PE ist besonders widerstandsfähig gegen abrasive Belastungen wie sie beim Betrieb von Windenergieanlagen insbesondere an den Rotorkanten auftritt.

Fig. 3 zeigt einen Ausschnitt des Rotorblattelementes 1110. An dieser Stelle des Rotorblattelementes 1110 verfügt das Rotorblattelement 1110 über folgenden Schichtaufbau: Eine erste Schicht (11), die zumindest teilweise aus Polyethylen besteht, eine Schicht (12), die teilweise aus einem Elastomer besteht, und wenigstens eine Schicht (13) als Basis, die zumindest teilweise aus einem Duroplast besteht. Ein textiles Flächengebilde (14) mit Rovings (15,16,17) ist so zwischen der Schicht (12) und (13) angeordnet, dass ein Teil der Rovings (15) zumindest stellenweise vollständig in die Schicht (12) eingebettet ist, ein Teil der Rovings (16) zumindest stellenweise vollständig in die Schicht (13) eingebettet ist und ein Teil der Rovings (17) zumindest stellenweise teilweise in die Schicht (12) und teilweise in die Schicht (13) eingebettet sind. In diesem Ausführungsbeispiel bestehen die Rovings aus Glasfasern, die Duroplaste ist ein Epoxidharz, das Polyethylen ist ein Polyethylen mit ultrahohem Molekulargewicht (UHMW-PE) und das Elastomer ist EPDM.

## Patentansprüche

1. Verbundbauteil (10), **gekennzeichnet durch** folgenden Schichtenaufbau
a) eine Schicht (11), die zumindest teilweise aus Polyethylen besteht, wobei das Polyethylen ein Ultra High Molecular Polyethylen (UHMW-PE) ist,
b) eine Schicht (12), die zumindest teilweise aus einem Elastomer besteht,
c) eine Schicht (13), die zumindest teilweise aus einem Duroplast oder einem Thermoplast besteht, wobei es sich bei dem Duroplast oder dem Thermoplast um ein Kunststoffharzsystem auf Epoxid-Basis handelt,
wobei die Schicht (11) unmittelbar an der Schicht (12) angeordnet ist und wobei die Schicht (12) unmittelbar an der Schicht (13) angeordnet ist und
wobei ein textiles Flächengebilde (14) mit Rovings (15,16,17) so zwischen der Schicht (12) und (13) angeordnet ist, dass
ein Teil der Rovings (15) zumindest stellenweise vollständig in die Schicht (12) eingebettet ist,
ein Teil der Rovings (16) zumindest stellenweise vollständig in die Schicht (13) eingebettet ist und
ein Teil der Rovings (17) zumindest stellenweise teilweise in die Schicht (12) und teilweise in die Schicht (13) eingebettet sind.

2. Verbundbauteil nach Anspruch 1, wobei der Tex-Wert gemäß ISO 1144 der Einzelfilamente der Rovings zwischen 250 und 2500 tex liegt, wobei der Tex-Wert gemäß ISO 1144 der Einzelfilamente der Rovings vorzugsweise einen Wert von größer gleich 250 tex aufweist.

3. Verbundbauteil nach einem der vorherigen Ansprüche, wobei die Rovings (15), die zumindest stellenweise vollständig in die Schicht (12) eingebettet sind, an den Stellen, an denen die Rovings (15) in die Schicht (12) eingebettet sind, überwiegend mit dem Elastomer aus der Schicht (12) durchsetzt sind.

4. Verbundbauteil nach einem der vorherigen Ansprüche, wobei die Rovings (16), die zumindest stellenweise vollständig in die Schicht (13) eingebettet sind, an den Stellen, an denen die Rovings (16) in die Schicht (13) eingebettet sind, überwiegend mit der Duroplaste aus der Schicht (13) durchsetzt sind.

5. Verbundbauteil nach einem der vorherigen Ansprüche, wobei die der Rovings (17), die zumindest stellenweise teilweise in die Schicht (12) und teilweise in die Schicht (13) eingebettet sind, an den Stellen, an denen die Rovings (17) teilweise in die Schicht (12) und teilweise in die Schicht (13) eingebettet sind, überwiegend mit dem Elastomer aus der Schicht (12) oder mit der Duroplaste aus der Schicht (13) durchsetzt sind.

6. Verbundbauteil nach einem der vorherigen Ansprüche, wobei die Schicht (11) und/oder Schicht (12) unabhängig voneinander eine Dicke von 100 bis 5.000 µm aufweist, vorzugsweise eine Dicke von 300 bis 900 µm aufweist, besonders bevorzugt eine Dicke von 400 bis 600 µm aufweist.

7. Verbundbauteil nach einem der vorherigen Ansprüche, **dadurch gekennzeichnet, dass** es sich bei dem textilen Flächengebilde um ein Gewebe, Gelege, Gewirke oder Geflecht handelt, vorzugsweise um ein Gewebe oder Gelege handelt.

8. Verbundbauteil nach einem der vorherigen Ansprüche, **dadurch gekennzeichnet, dass** das Elastomer ein Ethylen-Propylen-Kautschuk (EPM), Ethylen-Propylen-Dien-Kautschuk (EPDM), Ethylen-Acrylat-Kautschuk (EAM), Fluorkarbon-Kautschuk (FKM), Acrylat-Kautschuk (ACM), Polyurethan-Elastomer, Ethylenvinylacetat (EVA) oder Acrylnitril-Butadien-Kautschuk (NBR) ist, vorzugsweise ein Ethylen-Propylen-Dien-Kautschuk (EPDM) ist.

9. Verbundbauteil nach einem der vorherigen Ansprüche, **dadurch gekennzeichnet, dass** es sich bei den Rovings (15,16,17) um Rovings aus UHMW-PE-Fasern, Carbonfasern, Glasfasern, Aramidfasern oder Mischungen daraus handelt, vorzugsweise um Rovings aus Glasfasern.

10. Verbundbauteil nach einem der vorherigen Ansprüche, **dadurch gekennzeichnet, dass** es sich bei dem textilen Flächengebilde um ein Gewebe oder Gelege handelt, dass es sich bei den Rovings (15,16,17) um Rovings aus Glasfasern handelt, dass das Polyethylen ein Ultra High Molecular Polyethylen (UHMW-PE) ist, dass das Elastomer ein Ethylen-Propylen-Dien-Kautschuk (EPDM) ist, und dass es sich bei dem Duroplast um ein Kunststoffharzsystem auf Epoxid-Basis handelt.

11. Verbundbauteil nach einem der vorherigen Ansprüche, **dadurch gekennzeichnet, dass** es sich bei dem Verbundbauteil um ein Rotorblatt handelt, vorzugsweise um ein Rotorblatt eines Windrades.

12. Windrad umfassend ein Verbundbauteil nach einem der Ansprüche 1 bis 11.

13. Verfahren zur Herstellung eines Verbundbauteiles nach einem der Ansprüche 1 bis 11, umfassend die folgenden Schritte:
- Herstellen oder Bereitstellen einer Schicht (11), die zumindest teilweise aus Polyethylen besteht, wobei das Polyethylen ein Ultra High Molecular Polyethylen (UHMW-PE) ist,
- Herstellen oder Bereitstellen einer Reaktionsmischung zur Herstellung eines Elastomers,
- Beschichten einer Seite der hergestellten oder bereitgestellten Schicht (11) mit der hergestellten oder bereitgestellten Reaktionsmischung zur Herstellung eines Elastomers,
- Herstellen oder Bereitstellen eines textilen Flächengebildes und Auflegen eines textilen Flächengebildes auf die beschichtete Reaktionsmischung zur Herstellung eines Elastomers, sodass ein Teil der Rovings zumindest stellenweise vollständig in die Reaktionsmischung eingebettet ist,
- Vulkanisieren bzw. Vulkanisierenlassen der hergestellten oder bereitgestellten Reaktionsmischung, sodass eine Schicht (12) resultiert, die zumindest teilweise aus einem Elastomer besteht,
- Herstellen oder Bereitstellen einer Reaktionsmischung zur Herstellung eines Duroplasts oder Thermoplasts, wobei es sich bei dem Duroplast oder dem Thermoplast um ein Kunststoffharzsystem auf Epoxid-Basis handelt,
- Beschichten der hergestellten Schicht (12) mit der hergestellten oder bereitgestellten Reaktionsmischung zur Herstellung eines Duroplasts oder Thermoplasts, sodass ein Teil der Rovings zumindest stellenweise vollständig in der Reaktionsmischung zur Herstellung eines Duroplasts oder Thermoplasts eingebettet ist,
- Aushärten bzw. Aushärtenlassen der hergestellten oder bereitgestellten Reaktionsmischung zur Herstellung eines Duroplasts oder Thermoplasts, sodass eine Schicht (13) resultiert, die zumindest teilweise aus einem Duroplast oder Thermoplast besteht.

## Claims

1. A composite component (10), **characterized by** the following layer construction
a) a layer (11) consisting at least partially of polyethylene, wherein the polyethylene is an ultra-high molecular weight polyethylene (UHMW-PE),
b) a layer (12) consisting at least partially of an elastomer,
c) a layer (13) consisting at least partially of a thermoset or a thermoplastic, wherein the thermoset or the thermoplastic is a polymeric resin system based on epoxide,
wherein the layer (11) is arranged directly on the layer (12) and wherein the layer (12) is arranged directly on the layer (13), and
wherein a textile fabric (14) with rovings (15,16,17) is arranged between the layer (12) and (13) such that
some of the rovings (15) are embedded at least in places completely in the layer (12),
some of the rovings (16) are embedded at least in places completely in the layer (13), and
some of the rovings (17) are embedded at least in places partially in the layer (12) and partially in the layer (13).

2. The composite component as claimed in claim 1, wherein the ISO 1144 Tex value of the individual filaments of the rovings is between 250 and 2500 tex, wherein the ISO 1144 Tex value of the individual filaments of the rovings preferably has a value of greater than or equal to 250 tex.

3. The composite component as claimed in any of the preceding claims, wherein the rovings (15) which are embedded at least in places completely in the layer (12) are interspersed predominantly with the elastomer from the layer (12) at the places at which the rovings (15) are embedded in the layer (12).

4. The composite component as claimed in any of the preceding claims, wherein the rovings (16) which are embedded at least in places completely in the layer (13) are interspersed predominantly with the thermoset from the layer (13) at the places at which the rovings (16) are embedded in the layer (13).

5. The composite component as claimed in any of the preceding claims, wherein the of the rovings (17) which are embedded at least in places partially in the layer (12) and partially in the layer (13) are interspersed predominantly with the elastomer from the layer (12) or with the thermoset from the layer (13) at the places at which the rovings (17) are embedded partially in the layer (12) and partially in the layer (13).

6. The composite component as claimed in any of the preceding claims, wherein the layer (11) and/or the layer (12) independently of one another has a thickness of 100 to 5000 µm, preferably a thickness of 300 to 900 µm, more preferably a thickness of 400 to 600 µm.

7. The composite component as claimed in any of the preceding claims, **characterized in that** the textile fabric is a woven fabric, laid-scrim fabric, knitted fabric or braided fabric, preferably a woven fabric or laid-scrim fabric.

8. The composite component as claimed in any of the preceding claims, **characterized in that** the elastomer is an ethylene-propylene rubber (EPM), ethylene-propylene-diene rubber (EPDM), ethylene-acrylate rubber (EAM), fluorocarbon rubber (FKM), acrylate rubber (ACM), polyurethane elastomer, ethylene-vinyl acetate (EVA) or acrylonitrile butadiene rubber (NBR), preferably an ethylene-propylene-diene rubber (EPDM).

9. The composite component as claimed in any of the preceding claims, **characterized in that** the rovings (15,16,17) are rovings made of UHMW-PE fibers, carbon fibers, glass fibers, aramid fibers or mixtures thereof, preferably rovings made of glass fibers.

10. The composite component as claimed in any of the preceding claims, **characterized in that** the textile fabric is a woven fabric or laid-scrim fabric, **in that** the rovings (15,16,17) are rovings made of glass fibers, **in that** the polyethylene is an ultra-high molecular weight polyethylene (UHMW-PE), **in that** the elastomer is an ethylene-propylene-diene rubber (EPDM), and **in that** the thermoset is a polymeric resin system based on epoxide.

11. The composite component as claimed in any of the preceding claims, **characterized in that** the composite component is a rotor blade, preferably a rotor blade of a wind turbine.

12. A wind turbine comprising a composite component as claimed in any of claims 1 to 11.

13. A method for producing a composite component as claimed in any of claims 1 to 11, comprising the following steps:
• producing or providing a layer (11) consisting at least partially of polyethylene, wherein the polyethylene is an ultra-high molecular weight polyethylene (UHMW-PE),
• producing or providing a reaction mixture for producing an elastomer,
• coating one side of the produced or provided layer (11) with the produced or provided reaction mixture for producing an elastomer,
• producing or providing a textile fabric and laying a textile fabric onto the coated reaction mixture for producing an elastomer, so that some of the rovings are embedded at least in places completely in the reaction mixture,
• vulcanizing the produced or provided reaction mixture or allowing it to vulcanize, so that a layer (12) results which consists at least partially of an elastomer,
• producing or providing a reaction mixture for producing a thermoset or thermoplastic, wherein the thermoset or the thermoplastic is a polymeric resin system based on epoxide,
• coating the produced layer (12) with the produced or provided reaction mixture for producing a thermoset or thermoplastic, so that some of the rovings are embedded at least in places completely in the reaction mixture for producing a thermoset or thermoplastic,
• curing the produced or provided reaction mixture for producing a thermoset or thermoplastic or allowing it to cure, so that a layer (13) results which consists at least partially of a thermoset or thermoplastic.

## Revendications

1. Élément composite (10), **caractérisé par** la structure de couche suivante
a) une couche (11) qui est constituée au moins partiellement de polyéthylène, dans lequel le polyéthylène est un polyéthylène à poids moléculaire ultra élevé (UHMW-PE),
b) une couche (12) qui est constituée au moins partiellement d'un élastomère,
c) une couche (13) qui est constituée au moins partiellement d'une résine thermodurcissable ou d'un thermoplastique, dans lequel la résine thermodurcissable ou le thermoplastique est un système de résine plastique à base d'époxy,
dans lequel la couche (11) est disposée directement sur la couche (12) et dans lequel la couche (12) est disposée directement sur la couche (13) et
dans lequel une surface textile (14) avec des mèches (15, 16, 17) est disposée entre les couches (12) et (13) de sorte que
une partie des mèches (15) est, au moins par endroits, complètement incorporée dans la couche (12),
une partie des mèches (16) est, au moins par endroits, complètement incorporée dans la couche (13) et
une partie des mèches (17) sont, au moins par endroits, partiellement incorporées dans la couche (12) et partiellement dans la couche (13).

2. Élément composite selon la revendication 1, dans lequel la valeur Tex selon ISO 1144 des filaments individuels des mèches est comprise entre 250 et 2500 tex, dans lequel la valeur Tex selon ISO 1144 des filaments individuels des mèches présente de préférence une valeur supérieure ou égale à 250 tex.

3. Élément composite selon l'une quelconque des revendications précédentes, dans lequel les mèches (15) qui sont, au moins par endroits, complètement incorporées dans la couche (12) sont majoritairement traversées par l'élastomère de la couche (12) aux endroits où les mèches (15) sont incorporées dans la couche (12).

4. Élément composite selon l'une quelconque des revendications précédentes, dans lequel les mèches (16) qui sont, au moins par endroits, complètement incorporées dans la couche (13) sont majoritairement traversées par la résine thermodurcissable de la couche (13) aux endroits où les mèches (16) sont incorporées dans la couche (13).

5. Élément composite selon l'une quelconque des revendications précédentes, dans lequel celles des mèches (17) qui sont, au moins par endroits, partiellement incorporées dans la couche (12) et partiellement dans la couche (13) sont traversées principalement par l'élastomère de la couche (12) ou par la résine thermodurcissable de la couche (13) aux endroits où les mèches (17) sont incorporées partiellement dans la couche (12) et partiellement dans la couche (13).

6. Élément composite selon l'une quelconque des revendications précédentes, dans lequel la couche (11) et/ou couche (12) présente indépendamment l'une de l'autre une épaisseur de 100 à 5000 µm, présente de préférence une épaisseur de 300 à 900 µm, présente particulièrement préférentiellement une épaisseur de 400 à 600 µm.

7. Élément composite selon l'une quelconque des revendications précédentes, **caractérisé en ce que** la surface textile est un tissu, un non-tissé, un tricot ou une tresse, de préférence un tissu ou non-tissé.

8. Élément composite selon l'une quelconque des revendications précédentes, **caractérisé en ce que** l'élastomère est un caoutchouc éthylène-propylène (EPM), un caoutchouc éthylène-propylène-diène (EPDM), un caoutchouc acrylate d'éthylène (EAM), un caoutchouc fluorocarboné (FKM), un caoutchouc acrylate (ACM), un élastomère polyuréthane, un acétate de vinyle d'éthylène (EVA) ou un caoutchouc acrylonitrile butadiène (NBR), de préférence est un caoutchouc éthylène propylène-diène (EPDM).

9. Élément composite selon l'une quelconque des revendications précédentes, **caractérisé en ce que** les mèches (15, 16, 17) sont des mèches en fibres UHMW-PE, fibres de carbone, fibres de verre, fibres aramides ou mélanges de celles-ci, de préférence des mèches en fibres de verre.

10. Élément composite selon l'une quelconque des revendications précédentes, **caractérisé en ce que** la surface textile est un tissu ou un non-tissé, que les mèches (15, 16, 17) sont des mèches en fibres de verre, que le polyéthylène est un polyéthylène à poids moléculaire ultra élevé (UHMW-PE), que l'élastomère est un caoutchouc éthylène-propylène-diène (EPDM) et que la résine thermodurcissable est un système de résine plastique à base d'époxy.

11. Élément composite selon l'une quelconque des revendications précédentes, **caractérisé en ce que** l'élément composite est une pale de rotor, de préférence une pale de rotor d'éolienne.

12. Éolienne comprenant un élément composite selon l'une quelconque des revendications 1 à 11.

13. Procédé de fabrication d'un élément composite selon l'une quelconque des revendications 1 à 11, comprenant les étapes suivantes :
- la fabrication ou fourniture d'une couche (11) qui est constituée au moins partiellement de polyéthylène, dans lequel le polyéthylène est un polyéthylène à poids moléculaire ultra élevé (UHMW-PE),
- la fabrication ou fourniture d'un mélange réactionnel pour la fabrication d'un élastomère,
- le revêtement d'un côté de la couche (11) fabriquée ou fournie avec le mélange réactionnel fabriqué ou fourni pour la fabrication d'un élastomère,
- la fabrication ou fourniture d'une surface textile et la pose d'une surface textile sur le mélange réactionnel revêtu pour la fabrication d'un élastomère, de sorte qu'une partie des mèches soit, au moins par endroits, entièrement incorporée dans le mélange réactionnel,
- la vulcanisation ou le fait de laisser vulcaniser le mélange réactionnel fabriqué ou fourni de sorte qu'il en résulte une couche (12) qui est constituée au moins partiellement d'un élastomère,
- la fabrication ou fourniture d'un mélange réactionnel pour la fabrication d'une résine thermodurcissable ou d'un thermoplastique, dans lequel la résine thermodurcissable ou le thermoplastique est un système de résine plastique à base d'époxy,
- le revêtement de la couche (12) fabriquée avec le mélange réactionnel fabriqué ou fourni pour la fabrication d'une résine thermodurcissable ou d'un thermoplastique, de sorte qu'une partie des mèches soit, au moins par endroits, complètement incorporée dans le mélange réactionnel pour la fabrication d'une résine thermodurcissable ou d'un thermoplastique,
- le durcissement ou le fait de laisser durcir le mélange réactionnel fabriqué ou fourni pour la fabrication d'une résine thermodurcissable ou d'un thermoplastique, de sorte qu'il en résulte une couche (13) qui est constituée au moins par endroits d'une résine thermodurcissable ou d'un thermoplastique.
